# EUROPEAN PATENT SPECIFICATION

(11) **EP 0 988 876 B1**
(45) Date of publication and mention of the grant of the patent: **02.05.2003**
(21) Application number: 99306628.1
(22) Date of filing: 20.08.1999
(51) Int. Cl.: A63F 13/00, H04H 9/00

(54) **Method and apparatus for sampling remote data sources**
Verfahren und Vorrichtung zur Abfrage von entfernten Datenquellen
Méthode et appareil pour l'interrogation de sources éloignées de données

(30) Priority: 28.08.1998 EP 98306950
(43) Date of publication of application: 29.03.2000
(73) Proprietor: Two Way TV Limited, Avonmore Road, London W14 8TS (GB)
(72) Inventor: Malaure, Jason Robert, Twickenham, Middlesex, TW2 5RN (GB); Kydd, Richard Andrew, Twickenham, Middlesex, TW2 5TT (GB)
(74) Representative: Skone James, Robert Edmund

(56) References cited:
- EP-A- 0 745 412
- WO-A-98/07485
- US-A- 5 013 138

## Description

The invention relates to a method and apparatus for sampling, at a central location, data generated from a number of remote data sources.

With the increasing ability to communicate at speed with a variety of remote data sources, there is an increasing need to find efficient systems for obtaining data from those sources for evaluation. A particularly important example of this is in game play applications in which a number of players at remote sites compete either directly or indirectly with each other in playing a game simultaneously. On completion of the game, the players wish to know as quickly as possible whether they have won or at least have a general indication of their level of success. The game may be solely locally generated, the game being played individually with scores being transmitted back to a central location for comparison or it may involve a degree of interactivity with data flow to and from the central location and the remote data sources during the playing of the game. Recently, games have been developed which relate to broadcast TV programs such as quiz shows which allow the remote users or players to compete with the same questions as in the quiz show.

As these applications become more popular, large numbers of remote data sources become involved in a single application or game. It is necessary to find a way of evaluating the game scores centrally as quickly as possible. The most straightforward approach is to require each remote data source to make contact with the central location individually, for example via the public switched telephone network or some other medium such as the Internet. However, it is conceivable that several thousand participants may be involved and the central location cannot cope with each of these supplying information substantially simultaneously. Receipt of all scores would take a long time or would require very expensive infrastructure that would only be used to its potential for a small percentage of the time together with the need for a significant degree of processing.

EP-A-0504267 describes a method of determining the winners of a game of skill without the need to input all the scores. Statistical sampling is used to upload scores from a small fraction of the remote players. Tentative winners are determined and a statistical curve is then downloaded to all the players and only those players who are equal or better than the winning score communicate their scores directly to the central location. This approach is based on the assumption that the central location can select a random pool of remote participants initially and request scores from them. However, in many situations, it is unlikely that the central location will know which remote data sources have participated in the game. In that situation, the techniques described in the prior art would not be suitable.

WO-A-98/07485 discloses an interactive broadcasting system in which remote contestants enter their answers to quiz questions and these answers are stored locally. Each answer is compared with surrogate answers supplied from the central station and if correct, a "correct answer" total is incremented. Additionally, a "total score" counter is incremented by the number of points assigned to the question.

At the end of the game, a suitable signal is generated centrally which causes each local terminal to check whether the number of correct answers exceeds a value such as 50. Each terminal satisfying this requirement is then caused to telephone the central station. If the central station finds that all incoming phone lines are active, it sends a new "correct answer" total and the process repeats. This passive feedback gathering process has limitations, particularly on networks with large numbers of subscribers when potentially hundreds of thousands of participants may try to return feedback at the same time.

In accordance with the present invention, a method of sampling, at a central location, data generated from a number of remote data sources comprises:
a) causing those data sources with generated data to implement a local response function;
b) transmitting information from the central location to the remote data sources relating to the outcome of the local response function;
c) causing those data sources with generated data to determine whether the outcome of the local response function satisfies a predetermined relationship with the information transmitted from the central location, and, if it does, to transmit the generated data to the central location, and is characterized in that the local response function is independent of the locally generated data.

With this invention, retrieval of data is restricted firstly to those remote data sources which have generated data, for example participated in the game, which is determined locally. In addition, a sample of those remote data sources is selected using the local response function. Furthermore, the local response function is conveniently unrelated to the locally generated data since this enables its outcome to be more closely predicted.

In general, the method is not used to determine a final game position for each remote data source which has participated but instead will enable the remote data sources at least to determine whether or not the locally generated data falls within a particular range, for example an upper quartile.

In some cases, the data returned to the central location initially is provided from a sufficiently large pool of remote data sources to enable a threshold defining percentile data such as the 5% percentile to be identified. Typically, however, the method further comprises:
d) comparing the transmitted data at the central location to generate threshold data, and transmitting the threshold data to all the remote data sources which generated data, for comparison with the locally generated data, the remote data sources transmitting their generated data to the central location if it satisfies a predetermined relationship with the threshold data.

This provides an iterative process in which the threshold data can be refined until a situation is reached in which the desired percentile threshold has been found. This can then be communicated to the remote data sources enabling them to determine whether or not the locally generated data falls within that percentile.

In some cases, the number of remote data sources which respond initially will be either too few or too many and preferably the method further comprises determining the number of remote data sources which have transmitted data to the central location, and, if this differs from a desired number, transmitting new information relating to the outcome of the local response function and repeating step c), the new information being chosen to result in the number of local data sources transmitting data being closer to the desired number.

The information which is transmitted will depend on the form of the local response function and the processing which can be carried out locally. In a simple case, the local response function is a random number generating function. In that case, the information which is transmitted can comprise a range of numbers selected from those numbers which could be generated by the random number generating function, step c) comprising determining whether the locally generated random number falls within the transmitted range. This is particularly convenient since the range can then be varied depending upon the number of remote data sources which respond. If there is a small number then the range can be increased and if there is a large number the range can be decreased. The range itself could be defined between upper and lower values which are transmitted or a single value could be transmitted defining an upper limit, the lower limit being zero.

In other cases, the information which is transmitted could be used locally to generate an outcome and not constitute the outcome itself.

The transmission of data from the central location to the remote users may be direct or indirect i.e. via multiple links/nodes etc.

As mentioned above, an important application of the invention is in the sampling of scores resulting from the playing of a game at the remote data sources. The game may be played in response to data transmitted from the central location together with locally generated instructions, for example as mentioned above in connection with a TV broadcast or the like. However, the game could also be wholly controlled locally and could even be played at a different time from the same game on other remote data sources providing the result of playing the game can be securely stored.

The invention is also applicable to other applications.

An example of a method and apparatus according to the invention will now be described with reference to the accompanying drawings, in which:-
Figure 1 is a schematic block diagram of the apparatus;
Figure 2 is a flow diagram illustrating operation of the central controller; and,
Figure 3 is a flow diagram illustrating operation of a remote unit.

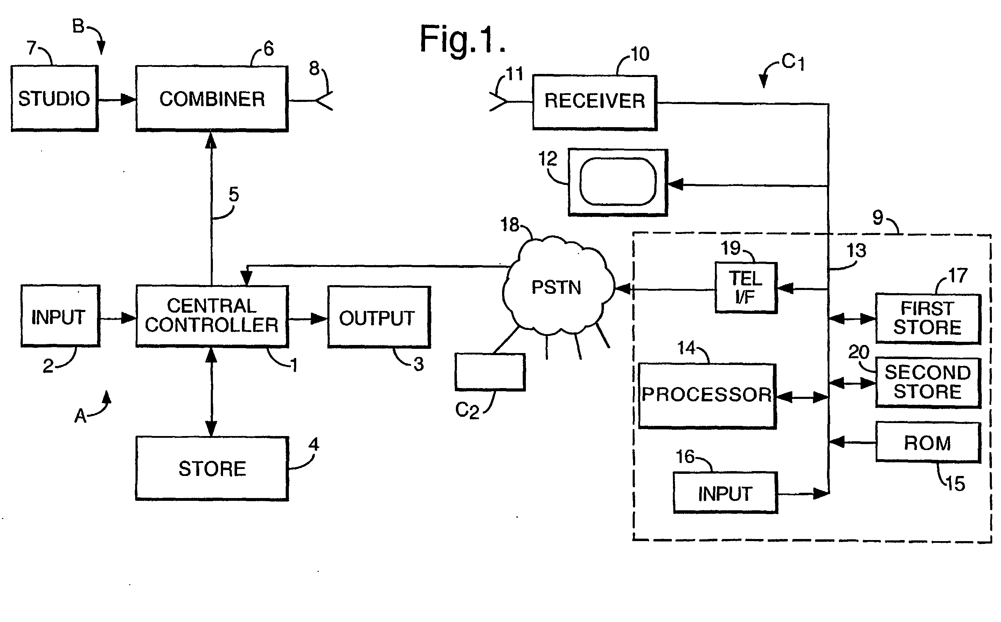

The interactive broadcast network shown in Figure 1 comprises a game control system A at a central location and including a central controller 1 which will include a computer such as a PC operating a Windows based system, connected to an input device 2 such as a keyboard and/or mouse and the like and to an output device 3 which may include a monitor and/or printer. A store 4 stores data relating to service functions and remote users, which can be accessed and amended by the central controller 1. The central controller 1 generates TV display signals and other control signals associated with various service functions on a land line 5 connected to a combining unit 6 of a TV broadcast system B. The combining unit 6 receives television broadcast signals from a studio 7 which, in the case of a live event, will have originated from outside broadcast cameras, and combines these with the signals on the line 5 so that they are transmitted simultaneously by a transmitter 8 to remote users or players C₁,C₂... The users will typically be remote not only from the system B but also from each other.

The signals supplied to the combiner 6 may be transmitted to the remote units within a vertical blanking interval (VBI) of the normal TV signal or on a separate radio FM-SCA channel or other data format such as a cable modem.

Other forms of transmission including satellite, cable and the internet may also be used to send signals to the remote users C.

Each remote user C₁,C₂..., only one shown in Figure 1, has a home or remote unit 9 constituting a "data source" connected to a television receiver 10 having an aerial 11 and a monitor 12. The home unit 9 includes an address/data bus 13 connected to the receiver 10, the bus 13 being connected to a microprocessor 14, a ROM 15 storing programme instructions for the processor 14, an input device 16 such as a keyboard or mouse, a first store (RAM) 17 for storing data supplied from the central controller 1, and a second signal store (RAM) 20 for storing data defining the identity of the remote unit 9 and the services to which the remote user has subscribed. Signals transmitted by the processor 14 can be communicated to the central controller 1 via a public switched telephone network 18 which is selectively accessed by a telephone interface unit 19 connected to the bus 13. Other media may be used for the return transmission including TV broadcast, cable, satellite and the Internet. In general the return signal medium will be different from the medium used to transmit to the remote user C.

The game control system A can generate data relating to a variety of games some of which may be associated with television broadcasts from the studio 7. For example, one game may allow remote users to predict the occurrence of certain events in a live event being broadcast, such as a live football match. In addition, the game control system A can generate signals to individual or groups of remote units which include data such as operating system upgrades and signals for enabling or disabling certain services.

These functions are described in more detail in EP 98302964.6 and EP 98301897.9 incorporated herein by reference.

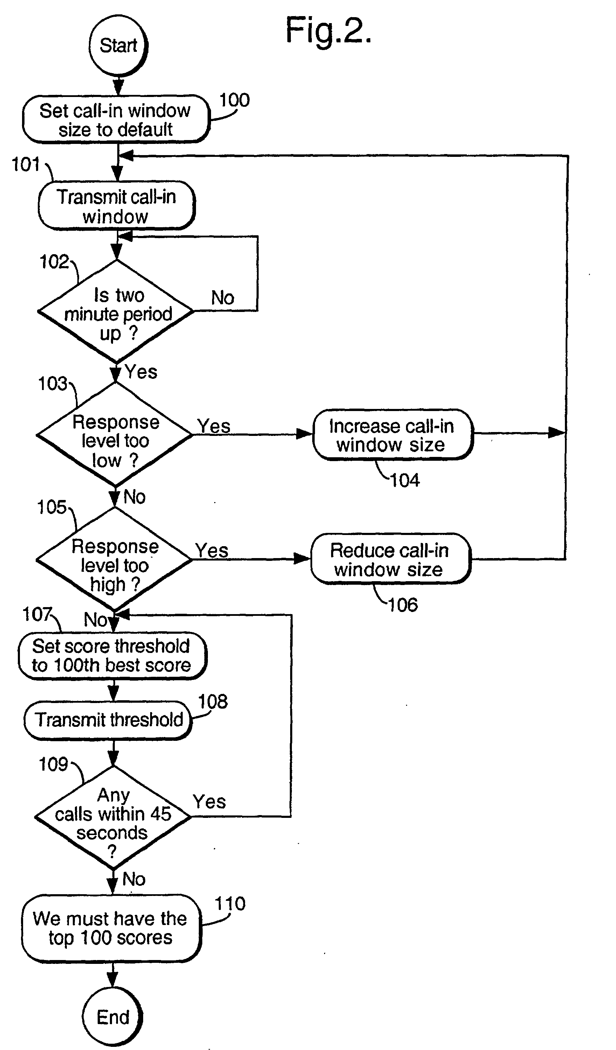

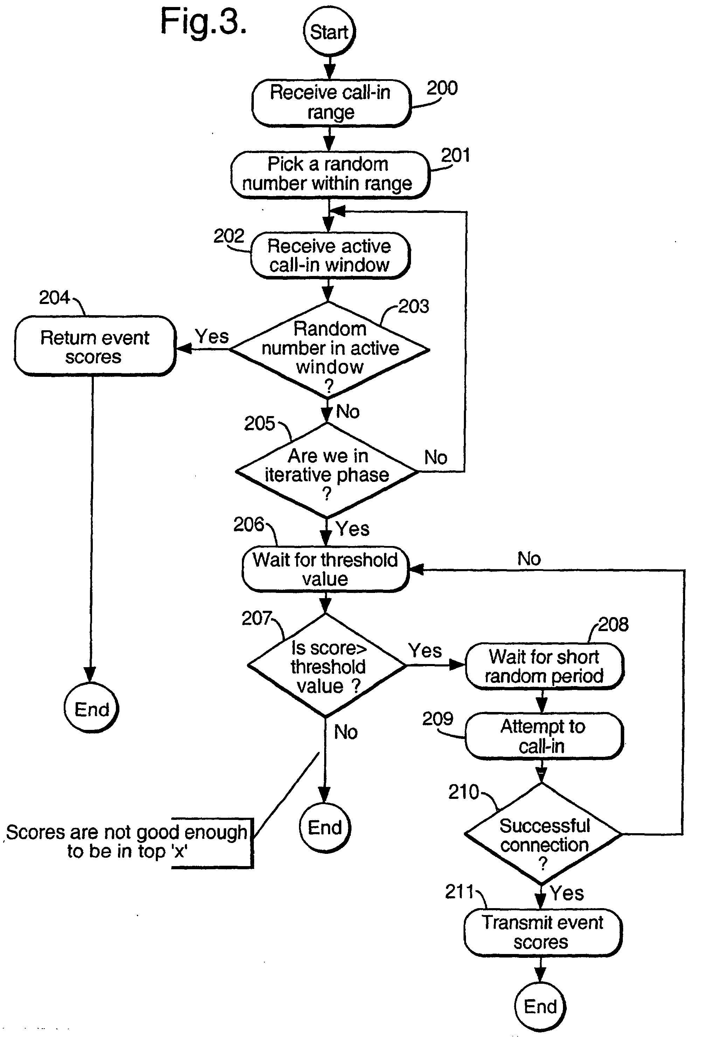

Typically, on completion of a game, each remote unit C will have a game score. For example, in the case of a quiz game, this may comprise the number of questions correctly answered. The present invention is concerned with the manner in which these scores can be analysed. Firstly, an initial sampling process is carried out partly under the control of the central controller 1 and partly under the control of the processor 14 in each remote unit C. Each remote unit C stores a local response function in its ROM 15, typically a random number generating function. In this example, it will be assumed that each random number generating function will generate a number in the range 1-10000. At the start of a sampling process, the central controller 1 generates a default call-in range or window (step 100, Figure 2) which, for example, could comprise the range of numbers 1-200. This range is transmitted (step 101) to all remote units C. If a remote unit C has participated in the game, the processor 14 will have performed the random number generating function (step 201) to generate a random number in the range 1-10000. This initial range may be preprogrammed or alternatively supplied to the remote units C at the beginning of a sampling operation as shown by step 200 in Figure 3. Following performance of the random number generating algorithm (step 201), the remote units C await the receipt of the active call-in window (step 202) from the central controller 1 (step 101).

If the remote unit C has participated in the game, upon receipt of the active call-in window, the processor 14 determines whether the locally generated random number falls within the active window (step 203). If it does, the processor 14 then returns the local score (step 204) to the central controller 1 using the normal return medium such as the PSTN 18. Alternatively, if the random number locally generated is not within the active window then the processor 14 determines whether it is currently operating in the sampling or iterative phase (step 205) and if in the sampling phase, processing returns to step 202.

Following transmission of the active call-in window in step 101, the central controller 1 then waits for a two minute period (step 102) and then reviews the response level, that is the number of remote units C which have responded because their locally generated random numbers fall within the active call-in window. The central controller 1 determines whether the response level is too low (step 103) and, if so, it increases the active call-in window size (step 104) and it is retransmitted in step 101.

For example, if the initial active call-in window was the range 1-200, this might be increased to 1-400.

If, however, the response level is too high (step 105), the active call-in window is reduced in size (step 106) and the new window size transmitted in step 101. Otherwise, the response level is considered acceptable and processing moves to step 107.

In this iterative phase the scores returned by the remote units are reviewed. In step 107, the central controller 1 selects the 100th best received score and this is transmitted (step 108) to all local units C as a threshold value. When the remote units receive the threshold value (step 206), this is compared with the local score (step 207) and if the score is greater than the threshold, the score is returned to the central controller 1. This return process involves waiting for a short random period (step 208), attempting to call the central controller (step 209), determining a successful connection (step 210) and, if successful, transmitting the score (step 211). If the connection is not successful, processing returns to step 206.

The central controller waits for a period of 45 seconds following transmission of the threshold in step 108 and determines whether any calls have been received (step 109). If they have not, this indicates that the top 100 scores have already been received (step 110) while if scores have been returned then the threshold needs to be reset and processing returns to step 107.

It is desirable for the players at the local units C to find out how they fared in relation to the rest of the playing population. It is not possible for the central controller 1 to transmit a position to each and every participant since not all local remote units will have called in. Following the scoring process, the central controller has a pool of scores from the remote users that have called in. If the size of this pool is increased with truly random scores (those not involved in the iterative scoring procedure) then the collection of scores could be used as a representative cross-section of the playing population's results. Details of this cross-section can be transmitted to the remote users allowing local resolution of each remote user's position relative to the rest of the playing population. This is implemented by dividing the ranked scores into 5% percentile bands. These 20 bands are transmitted to the remote users at the end of the scoring procedure. The local unit can then locally determine which percentile band the user falls into.

It should be noted that the various delays specified in Figures 2 and 3 are configurable and that for the sake of simplicity, Figure 2 ignores the situation in which no scores have been returned upon completion of the two minute period (step 102).

## Claims

1. A method of sampling, at a central location, data generated from a number of remote data sources, the method comprising:
a) causing those data sources with generated data to implement a local response function;
b) transmitting information from the central location to the remote data sources relating to the outcome of the local response function;
c) causing those data sources with generated data to determine whether the outcome of the local response function satisfies a predetermined relationship with the information transmitted from the central location, and, if it does, to transmit the generated data to the central location, **characterized in that** the local response function is independent of the locally generated data.

2. A method according to claim 1, further comprising:
d) comparing the transmitted data at the central location to generate threshold data, and transmitting the threshold data to all the remote data sources which generated data, for comparison with the locally generated data, the remote data sources transmitting their generated data to the central location if it satisfies a predetermined relationship with the threshold data.

3. A method according to claim 2, wherein the predetermined relationship is satisfied if the locally generated data exceeds the threshold data.

4. A method according to claim 2 or claim 3, further comprising repeating step d) in response to the most recently received transmitted data until no more data is received at the central location.

5. A method according to any of the preceding claims, further comprising determining the number of remote data sources which have transmitted data to the central location, and, if this differs from a desired number, transmitting new information relating to the outcome of the local response function and repeating step c), the new information being chosen to result in the number of local data sources transmitting data being closer to the desired number.

6. A method according to claim 5, wherein the determination step is made upon completion of a predetermined time period.

7. A method according to any of the preceding claims, wherein the local response function is a random number generating function.

8. A method according to claim 7, wherein step b) comprises transmitting a range of numbers selected from those numbers which could be generated by the random number generating function, step c) comprising determining whether the locally generated random number falls within the transmitted range.

9. A method according to any of the preceding claims, wherein the remote data sources generate data as a result of playing a game, the data comprising a game score.

10. A method according to claim 9, wherein the game is played in response to data transmitted from the central location and locally generated instructions.

11. A method according to claim 9 or claim 10, wherein the game is played in association with a TV broadcast.

12. A method according to any of the preceding claims, wherein the central location transmits to the remote data sources via a mass broadcast system such as terrestrial or satellite TV, a cable network or the Internet.

13. A method according to any of the preceding claims, wherein the remote data sources transmit to the central location via one of the public switch telephone network, the Internet or a dedicated communication line.

14. A method of operating a central station at the central location in a method according to any of the preceding claims, in which the central station transmits information from the central location to the remote data sources relating to the outcome of the local response function.

15. A method according to claim 14, when dependent on at least claim 2, wherein the central station compares the transmitted data received at the central location to generate threshold data and transmits the threshold data to all the remote data sources which generated data for comparison with the locally generated data.

16. A method of operating a remote data source in a method according to any of claims 1 to 14, in which if the remote data source has generated data, it performs a local response function, receives information transmitted from the central location relating to the outcome of the local response function, determines whether the outcome of the local response function satisfies a predetermined relationship with the information transmitted from the central location, and, if it does, transmits the generated data to the central location.

17. A data generating and sampling system comprising a central station and a number of remote data sources adapted to carry out a method according to any of claims 1 to 14.

18. A central station adapted to carry out a method according to claim 14 or claim 15.

19. A data source adapted to carry out a method according to claim 16.

## Patentansprüche

1. Verfahren zum Abtasten an einem zentralen Standort von Daten, die von einer Anzahl entfernter Datenquellen erzeugt wurden, das Verfahren umfassend:
a) Veranlassen, dass die Datenquellen mit erzeugten Daten eine lokale Antwortfunktion implementieren;
b) Übertragen von Information über das Ergebnis der lokalen Antwortfunktion vom zentralen Standort an die entfernten Datenquellen;
c) Veranlassen, dass die Datenquellen mit erzeugten Daten bestimmen, ob das Ergebnis der lokalen Antwortfunktion ein vorbestimmtes Verhältnis mit der vom zentralen Standort übertragenen Information erfüllt, und, wenn es das Verhältnis erfüllt, dass die erzeugten Daten an den zentralen Standort übertragen werden, **dadurch gekennzeichnet, dass** die lokale Antwortfunktion von den lokal erzeugten Daten unabhängig ist.

2. Verfahren nach Anspruch 1, weiter umfassend:
d) Vergleichen der übertragenen Daten am zentralen Standort zum Erzeugen von Schwellenwertdaten, und Übertragen der Schwellenwertdaten an alle entfernten Datenquellen, die Daten erzeugten, zum Vergleich mit den lokal erzeugten Daten, wobei die entfernte Datenquellen ihre erzeugten Daten an den zentralen Standort übertragen, wenn sie ein vorbestimmtes Verhältnis mit den Schwellenwertdaten erfüllen.

3. Verfahren nach Anspruch 2, bei dem das vorbestimmte Verhältnis erfüllt ist, wenn die lokal erzeugten Daten die Schwellenwertdaten übersteigen.

4. Verfahren nach Anspruch 2 oder 3, umfassend das Wiederholen des Schritts d) in Reaktion auf die jüngst empfangenen übertragenen Daten, bis am zentralen Standort keine Daten mehr empfangen werden.

5. Verfahren nach einem der vorhergehenden Ansprüche, umfassend das Bestimmen der Anzahl entfernter Datenquellen, die Daten an den zentralen Standort übertragen haben, und, wenn diese sich von einer erwünschten Anzahl unterscheidet, Übertragen neuer Information über das Ergebnis der lokalen Antwortfunktion und Wiederholen von Schritt c), wobei die neue Information so gewählt wird, dass sie eine Anzahl Daten übertragender lokaler Datenquellen zu Ergebnis hat, die der gewünschten Anzahl näher kommt.

6. Verfahren nach Anspruch 5, bei dem der Bestimmungsschritt nach Ablauf eines vorbestimmten Zeitraums durchgeführt wird.

7. Verfahren nach einem der vorhergehenden Ansprüche, bei dem die lokale Antwortfunktion eine Zufallszahl-Erzeugungsfunktion ist.

8. Verfahren nach Anspruch 7, bei dem Schritt b) den Schritt des Übertragens eines Bereichs von Zahlen umfasst, die aus denjenigen Zahlen ausgewählt wurden, die von der Zufallszahl-Erzeugungsfunktion erzeugt werden könnten, und Schritt c) den Schritt des Bestimmens umfasst, ob die lokal erzeugte Zufallszahl in den übertragenen Bereich fällt.

9. Verfahren nach einem der vorhergehenden Ansprüche, bei dem die entfernten Datenquellen als Ergebnis des Spielens eines Spiels Daten erzeugen, wobei die Daten einen Spielstand umfassen.

10. Verfahren nach Anspruch 9, bei dem das Spiel in Reaktion auf Daten, die vom zentralen Standort aus übertragen werden, und lokal erzeugten Anweisungen gespielt wird.

11. Verfahren nach Anspruch 9 oder Anspruch 10, bei dem das Spiel im Zusammenhang mit einer Fernsehsendung gespielt wird.

12. Verfahren nach einem der vorhergehenden Ansprüche, bei dem der zentrale Standort über ein Massenausstrahlungssystem, wie zum Beispiel terrestrisches oder Satellitenfernsehen, ein Kabelnetzwerk oder das Internet an die entfernten Datenquellen überträgt.

13. Verfahren nach einem der vorhergehenden Ansprüche, bei dem die entfernten Datenquellen über das öffentliche Telefonnetz, das Internet oder eine dedizierte Kommunikationsleitung an den zentralen Standort übertragen.

14. Verfahren zum Betreiben einer Zentralstation am zentralen Standort in einem Verfahren nach einem der vorhergehenden Ansprüche, bei dem die Zentralstation Information über das Ergebnis der lokalen Antwortfunktion vom zentralen Standort an die entfernten Datenquellen überträgt.

15. Verfahren nach Anspruch 14, wenn er mindestens von Anspruch 2 abhängt, bei dem die Zentralstation die am zentralen Standort empfangenen übertragenen Daten vergleicht, um Schwellenwertdaten zu erzeugen, und die Schwellenwertdaten an alle entfernten Datenquellen, die Daten erzeugten, zum Vergleich mit den lokal erzeugten Daten überträgt.

16. Verfahren zum Betreiben einer entfernten Datenquelle in einem Verfahren nach einem der Ansprüche 1 bis 14, bei dem, wenn die entfernte Datenquelle Daten erzeugt hat, sie eine lokale Antwortfunktion durchführt, vom zentralen Standort übertragene Information über das Ergebnis der lokalen Antwortfunktion empfängt, bestimmt, ob das Ergebnis der lokalen Antwortfunktion ein vorbestimmtes Verhältnis mit der vom zentralen Standort übertragenen Information erfüllt, und, wenn es das Verhältnis erfüllt, die erzeugten Daten an den zentralen Standort überträgt.

17. Datenerzeugungs- und -abtastsystem, mit einer Zentralstation und einer Anzahl entfernter Datenquellen, die zum Durchführen eines Verfahrens nach einem der Ansprüche 1 bis 14 ausgelegt ist.

18. Zentralstation, die zum Durchführen eines Verfahrens nach Anspruch 14 oder Anspruch 15 ausgelegt ist.

19. Datenquelle, die zum Durchführen eines Verfahrens nach Anspruch 16 ausgelegt ist.

## Revendications

1. Procédé d'échantillonnage, à un emplacement central, de données générées depuis un certain nombre de sources de données distantes, le procédé comprenant les étapes consistant à :
a) amener ces sources de données avec des données générées à mettre en oeuvre une fonction de réponse locale ;
b) transmettre les informations depuis l'emplacement central aux sources de données distantes se rapportant au résultat de la fonction de réponse locale ;
c) amener ces sources de données avec des données générées à déterminer si le résultat de la fonction de réponse locale satisfait une relation prédéterminée avec les informations transmises depuis l'emplacement central et, si c'est le cas, à transmettre les données générées à l'emplacement central, **caractérisé en ce que** la fonction de réponse locale est indépendante des données générées localement.

2. Procédé selon la revendication 1, comprenant en outre les étapes consistant à :
d) comparer les données transmises à l'emplacement central pour générer des données de seuil et transmettre les données de seuil à toutes les sources de données distantes qui ont généré des données, pour comparaison avec les données générées localement, les sources de données distantes transmettant leurs données générées à l'emplacement central si elles satisfont une relation prédéterminée avec les données de seuil.

3. Procédé selon la revendication 2, dans lequel la relation prédéterminée est satisfaite si les données générées localement dépassent les données de seuil.

4. Procédé selon la revendication 2 ou 3, comprenant en outre la répétition de l'étape d) en réponse aux données transmises reçues le plus récemment jusqu'à ce que plus aucune donnée ne soit reçue à l'emplacement central.

5. Procédé selon l'une quelconque des revendications précédentes, comprenant en outre la détermination du nombre de sources de données distantes qui ont transmis des données à l'emplacement central et, si celui-ci diffère d'un nombre souhaité, la transmission de nouvelles informations se rapportant au résultat de la fonction de réponse locale et la répétition de l'étape c), les nouvelles informations étant choisies afin que le nombre de sources de données locales transmettant les données soit plus proche du nombre souhaité.

6. Procédé selon la revendication 5, dans lequel l'étape de détermination est effectuée à la fin d'une durée prédéterminée.

7. Procédé selon l'une quelconque des revendications précédentes, dans lequel la fonction de réponse locale est une fonction de génération de nombre aléatoire.

8. Procédé selon la revendication 7, dans lequel l'étape b) comprend la transmission d'une plage de nombres choisie à partir des nombres qui peuvent être générés par la fonction de génération de nombre aléatoire, l'étape c) comprenant la détermination du fait que le nombre aléatoire généré localement se trouve dans la plage transmise.

9. Procédé selon l'une quelconque des revendications précédentes, dans lequel les sources de données distantes génèrent des données comme résultat du déroulement d'un jeu, les données comprenant un score de jeu.

10. Procédé selon la revendication 9, dans lequel le jeu se déroule en réponse aux données transmises depuis l'emplacement central et aux instructions générées localement.

11. Procédé selon la revendication 9 ou 10, dans lequel le jeu se déroule en association avec une télédiffusion.

12. Procédé selon l'une quelconque des revendications précédentes, dans lequel l'emplacement central transmet aux sources de données distantes via un système de diffusion en masse tel que la télévision terrestre ou satellite, un réseau câblé ou l'Internet.

13. Procédé selon l'une quelconque des revendications précédentes, dans lequel les sources de données distantes transmettent à l'emplacement central via un système parmi le réseau téléphonique public commuté, l'Internet ou une ligne de transmission dédiée.

14. Procédé de mise en oeuvre d'une station centrale au niveau d'un emplacement central dans un procédé selon l'une quelconque des revendications précédentes, dans lequel la station centrale transmet des informations depuis l'emplacement central aux sources de données distantes se rapportant au résultat d'une fonction de réponse locale.

15. Procédé selon la revendication 14, lorsqu'elle est dépendante d'au moins la revendication 2, dans lequel la station centrale compare les données transmises reçues à l'emplacement central pour générer des données de seuil et transmet les données de seuil à toutes les sources de données distantes ayant généré des données pour comparaison avec les données générées localement.

16. Procédé de mise en oeuvre d'une source de données distante dans un procédé selon l'une quelconque des revendications 1 à 14, dans lequel, si la source de données distante a généré des données, elle exécute une fonction de réponse locale, reçoit les informations transmises depuis l'emplacement central se rapportant au résultat de la fonction de réponse locale, détermine si le résultat de la fonction de réponse locale satisfait une relation prédéterminée avec les informations transmises depuis l'emplacement central et, si c'est le cas, transmet les données générées à l'emplacement central.

17. Système de génération et d'échantillonnage de données comprenant une station centrale et un certain nombre de sources de données distantes conçues pour exécuter un procédé selon l'une quelconque des revendications 1 à 14.

18. Station centrale conçue pour exécuter un procédé selon la revendication 14 ou la revendication 15.

19. Source de données conçue pour exécuter un procédé selon la revendication 16.
